# EUROPÄISCHE PATENTANMELDUNG

(11) **EP 1 072 920 A1**
(43) Veröffentlichungstag der Anmeldung: **31.01.2001**
(21) Anmeldenummer: 99810667.8
(22) Anmeldetag: 26.07.1999
(51) Int. Cl.: G02B 6/38

(54) **Steckerteil für eine optische Steckverbindung**

(71) Anmelder: Diamond SA, 6616 Losone (CH)
(72) Erfinder: De Marchi Silverio, 6612 Ascona (CH)
(74) Vertreter: Wenger, René

(57) **Zusammenfassung**

Für die Zugfeste Verriegelung eines Steckerteils (1) in einem Buchsenteil ist ein Verriegelungselement (27) vorgesehen, das an einem Drehgelenk (39) schwenkbar am Steckerteil befestigt ist und das sich federnd auf dem Steckergehäuse abstützt. Das Verriegelungselement ist vorteilhaft auf das Steckergehäuse aufgeschnappt.

## Beschreibung

Die Erfindung betrifft ein Steckerteil für eine optische Steckverbindung gemäss dem Oberbegriff von Anspruch 1.

Im Gegensatz zu elektrischen Steckverbindungen spielt bei optischen Steckverbindungen die passgenaue Position des Steckerstifts eine bedeutende Rolle für die Qualität der Übertragungsleistung. Das Verriegelungselement hat daher die Aufgabe, das Steckerteil zugfest im Buchsenteil zu verriegeln. Die Verriegelung erfolgt dabei in der Regel selbständig beim Erreichen der endgültigen Einsteckposition. Zum Ausstecken des Steckerteils muss eine manuelle Entriegelungsbewegung ausgeführt werden.

Bei den gattungsmässig vergleichbaren Steckerteilen ist das Verriegelungselement in der Regel einstückig mit dem Steckergehäuse ausgebildet. Es hat dabei die Form eines Hebels, der über ein Biegegelenk federnd mit dem Gehäuse verbunden ist und an dessen Ende Sperrklinken oder andere Verriegelungselemente angeordnet sind. Ein Beispiel für ein derartiges Steckerteil ist in der WO 98/53347 dargestellt und beschrieben. Ein Nachteil dieser Ausführung besteht jedoch darin, dass das Steckergehäuse als aufwendiges Spritzgussteil hergestellt werden muss. Das Biegegelenk kann mit der Zeit erlahmen, sodass das Verriegelungselement seine Funktion nicht mehr ausüben kann. Ausserdem ist ein Kunststoffmaterial mit geeigneten Biegeeigenschaften nicht notwendigerweise gut geeignet für das Steckergehäuse.

Es ist daher eine Aufgabe der Erfindung, ein Steckerteil der Eingangs genannten Art zu schaffen, das mit einem einfach herzustellenden und gut funktionierenden Verriegelungselement versehen ist. Das Verriegelungselement soll ausserdem gut bedienbar sein und es soll die Handhabung des Steckerteils nicht durch vorstehende Teil und dergleichen behindern. Die Aufgabe wird erfindungsgemäss mit einem Steckerteil gelöst, das die Merkmale im Anspruch 1 aufweist.

Das an einem Drehgelenk schwenkbar am Steckerteil befestigte Verriegelungselement stützt sich federnd auf dem Steckergehäuse ab. Eine in sich federnde Verbindung über ein Biegegelenk ist daher nicht erforderlich. Das Verriegelungselement kann auf diese Weise aus einem anderen Werkstoff hergestellt werden als das Steckergehäuse, beispielsweise aus Metall. Abnützungserscheinungen treten dabei auch nach zahlreichen Betätigungen nicht auf.

Vorteilhaft ist das Verriegelungselement auf das Steckergehäuse aufgeschnappt, womit die Montage bzw. das Ersetzen eines Verriegelungselements wesentlich erleichtert wird. Eine besonders vorteilhafte Schnappverbindung wird dadurch erzielt, dass das Steckergehäuse ein Paar Gelenknocken aufweist und dass das Verriegelungselement ein Paar korrespondierende Ausnehmungen aufweise, in welche die Gelenknocken eingreifen. Denkbar wäre aber selbstverständlich auch eine Befestigung mittels einer separaten Achse oder dergleichen.

Eine vorteilhafte Federung des Verriegelungselements kann erreicht werden, wenn es eine Blattfeder aufweist, deren eines Ende derart auf dem Steckergehäuse aufliegt, dass die Blattfeder das Verriegelungselement in eine Verriegelungsposition vorspannt. Das Verriegelungselement ist dabei vorteilhaft so ausgebildet, dass es zwei etwa parallele Arme und ein die Arme verbindendes Griffstück aufweist, an dem die Blattfeder angeordnet ist. Die beiden Arme sind dabei seitlich vom Steckergehäuse angeordnet.

Das Verriegelungselement kann als einstückiges Biegeteil aus Metall ausgebildet sein. Die Blattfeder kann dabei leicht integriert werden und derartige Biegeteile lassen sich in grossen stückzahlen preiswert herstellen. An den freien Enden der Arme können Sperrklinken in der Form von Abwinklungen angeordnet sein. Die Abwinklungen verlaufen dabei unter einem spitzen Winkel zur Längsmittelachse des Steckerteils und bilden auf diese Weise Rampen, an denen die Arme beim Einstecken in ein Buchsenteil gegen die Federkraft schwenkbar sind.

In bestimmten Fällen ist es aus Platzgründen zweckmässig, wenn die Arme bei Schwenken des Verriegelungselements gegen die Federvorspannung wenigstens teilweise in korrespondierende Verbindungen am Steckergehäuse eintauchen.

Das Verriegelungselement ist vorteilhaft am kabelseitigen Ende des Steckerteils angelenkt. Auf diese Weise lässt es sich leicht mit dem Daumen am Griffstück betätigen. Auch eine Anlenkung am steckerstirnseitigen Ende des Steckerteils wäre aber grundsätzlich möglich.

Eine optische Steckverbindung wird mit Hilfe des beschriebenen Steckerteils zusammen mit einem Buchsenteil hergestellt, das wenigstens eine Buchse zur Aufnahme des Steckerstifts aufweist, wobei das Verriegelungselement beim Erreichen der endgültigen Einsteckposition in wenigstens eine Hinterschneidung am Buchsenteil eingreift. Es ist dabei ohne weiteres möglich, das ein erfindungsgemässes Steckerteil mit einem konventionellen Buchsenteil kombiniert wird.

Ein besonderer Vorteil kann erreicht werden, wenn das Buchsenteil einen Oberflächenabschnitt über der Einstecköffnung aufweist, der mit einem Oberflächenabschnitt am Verriegelungselement einen stumpfen Winkel einschliesst, wobei die Oberflächenabschnitte im wesentlichen stufenlos aneinander anschliessen. Beim Oberflächenabschnitt am Verriegelungselement handelt es sich dabei vorzugsweise um das Griffstück. Bei dieser Anordnung entstehen keinerlei hakenartige Vorsprünge, an denen sich die relativ dünnen Lichtwellenleiterkabel verhaken könnten.

Ein Ausführungsbeispiel der Erfindung ist in den Zeichnungen dargestellt und wird nachstehend genauer beschrieben. Es zeigen:
- Figur 1: eine Seitenansicht eines Steckerteils mit den Merkmalen der Erfindung,
- Figur 2: eine Draufsicht auf das Steckerteil gemäss Figur 1,
- Figur 3: eine Ansicht der Stirnseite des Steckerteils gemäss Figur 1,
- Figur 4: eine Explosionszeichnung des Steckerteils gemäss Figur 1,
- Figur 5: ein Längsschnitt durch das Steckerteil gemäss Figur 1 in etwas vergrösserter Darstellung,
- Figur 6: eine perspektivische Darstellung des Steckerteils gemäss Figur 1,
- Figur 7: das Steckerteil gemäss Figur 6 mit geöffneter Schutzklappe,
- Figur 8: eine Draufsicht auf die Einstecköffnung eines Buchsenteils,
- Figur 9: eine teilweise aufgeschnittene perspektivische Darstellung eines Verriegelungselements, und
- Figur 10a bis 10d: ein Einsteckvorgang an einem Buchsenteil in vier verschiedenen Sequenzen.

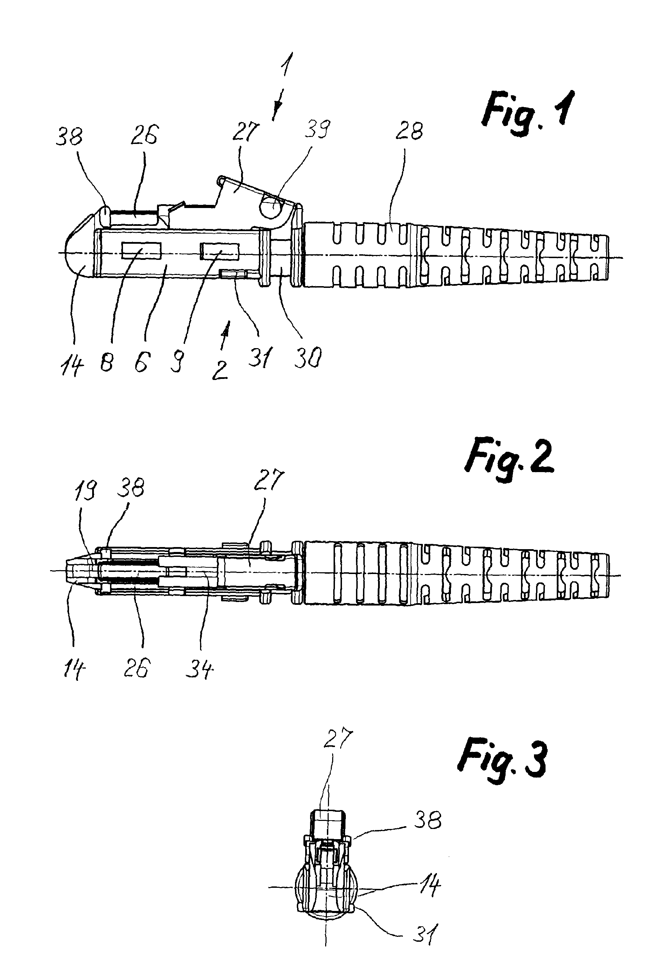

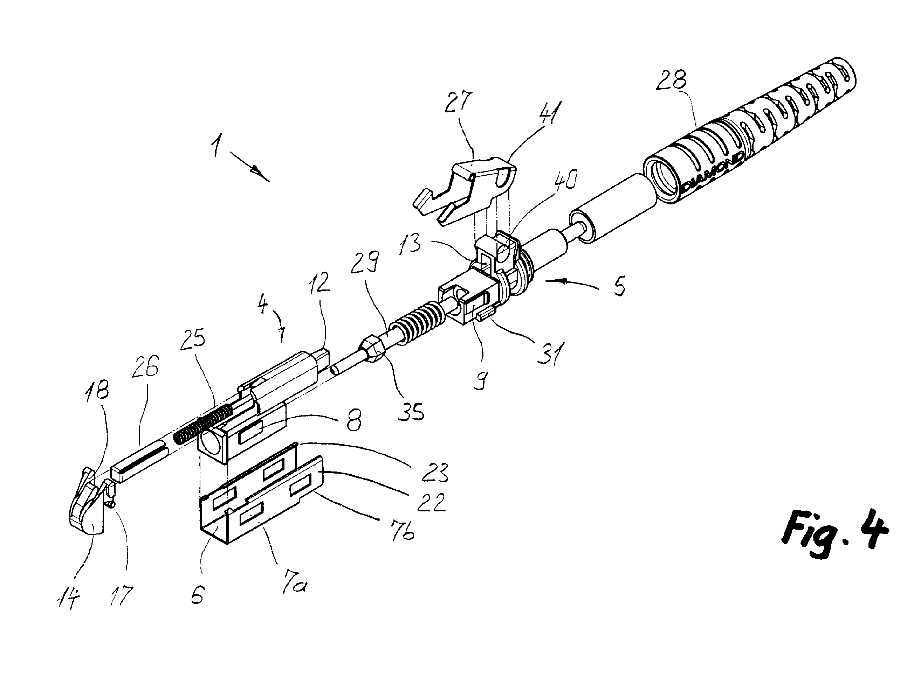

Wie in den Figuren 1 bis 4 dargestellt, besteht ein Steckerteil 1 im wesentlichen aus einem Stekkergehäuse 2, das in ein steckerstirnseitiges Gehäuseteil 4 und in ein kabelseitiges Gehäuseteil 5 aufgeteilt ist. Das Steckergehäuse enthält dabei einen Steckerstift 3, der in Richtung der Längsmittelachse 34 federnd gelagert ist. Selbstverständlich wäre es auch denkbar, dass im gleichen Steckergehäuse mehrere Steckerstifte gehalten sind.

Der Steckerstift 3 ist in einer Stifthalterung 29 fixiert, welche auf der gegenüberliegenden Seite das optische Kabel aufnimmt. Dieses ist aus Gründen der besseren Übersichtlichkeit jedoch hier nicht dargestellt. Ein flexibler Kabelknickschutz 28 begrenzt auf bekannte Weise den zulässigen Biegeradius am Kabel. Auf der Stifthalterung 29 ist eine Schraubendruckfeder 11 gelagert, welche einerseits am kabelseitigen Gehäuseteil 5 und andererseits am mehreckig ausgebildeten Kopfende 35 der Stifthalterung abgestützt ist.

Die beiden Gehäuseteile 4 und 5 werden mit Hilfe eines Schnappbügels 6 zusammengehalten, der etwa U-förmig ausgebildet. In beiden U-Schenkeln sind dabei je zwei rechteckige Aussparungen 7a, 7b angeordnet. Diese übergreifen je eine korrespondierende Erhebung 8, 9 auf den beiden Seitenwänden des steckerstirnseitigen Gehäuseteils 4 bzw. des kabelseitigen Gehäuseteils 5.

Die beiden Gehäuseteile 4 und 5 sind derart ausgebildet, dass die aneinander liegenden Berührungsflächen gleichzeitig eine Verdrehsicherung bewirken. So ist das Gehäuseteil 4 mit einer sich keilartig verjüngenden Sicherungsnase 12 versehen, welche in eine korrespondierende Ausnehmung 13 am Gehäuseteil 5 eingreift und sich dort leicht verkeilt. Die leichte Verkeilung bewirkt eine völlig spielfrei Verbindung zwischen den Gehäuseteilen. Am Gehäuseteil 5 sind zudem seitliche Stabilisierungsnocken 31 angeordnet, an denen sich der Schnappbügel 6 zusätzlich abstützt. An einem Halsabschnitt 30 können zwei Steckerteil mit Hilfe einer hier nicht dargestellten Klammer zu einem Duplexstecker kombiniert werden.

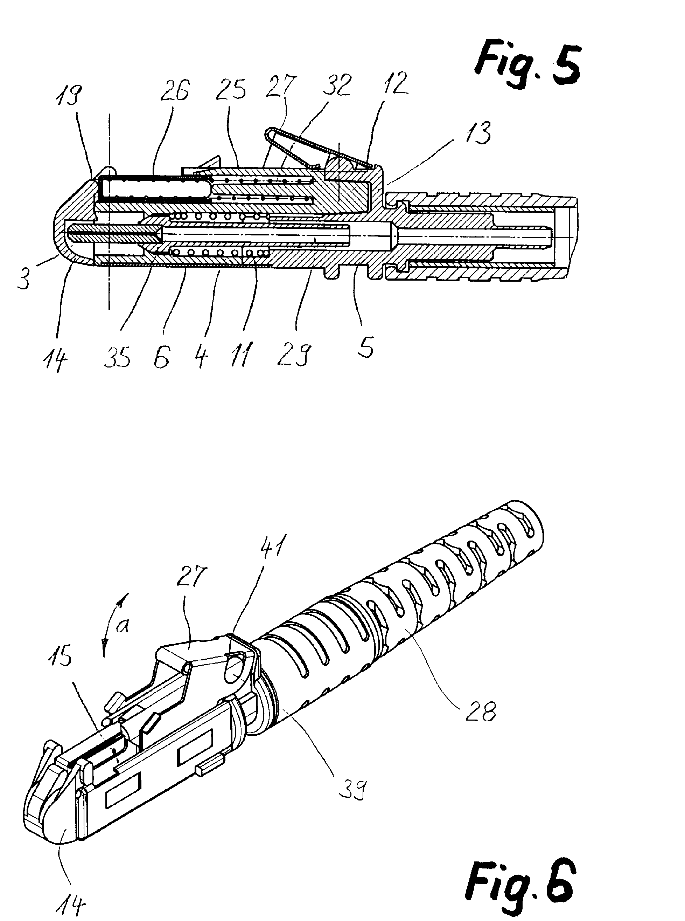

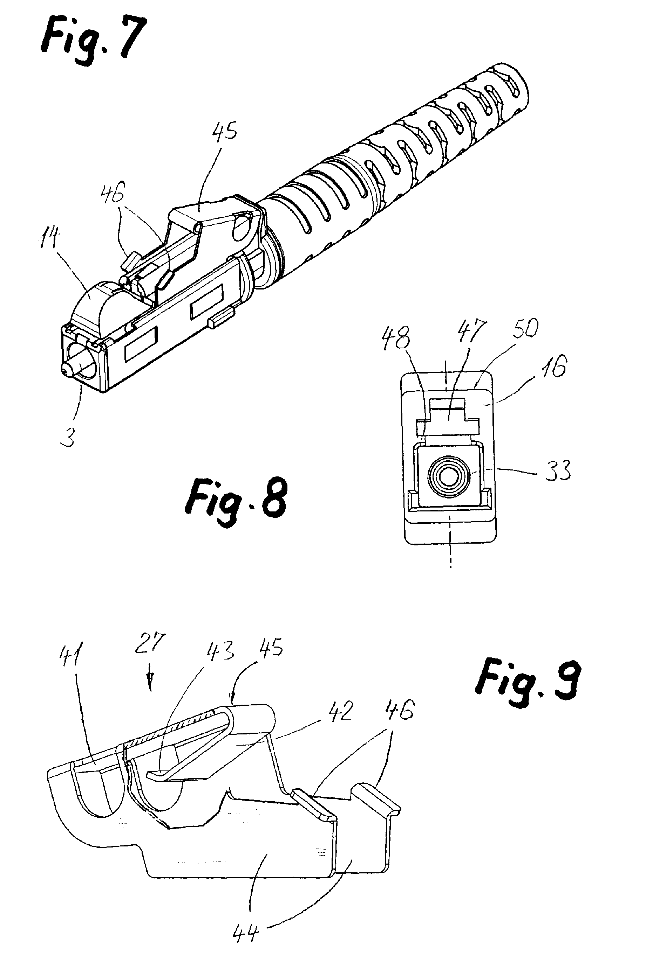

Die Steckerstirnseite ist im ungesteckten Zustand stets mit einer Schutzklappe 14 verschlossen. Diese verfügt über eine Gelenkgabel 18 mit seitlich daran angeordneten, voneinander wegweisenden Gelenknocken 17. Diese Gelenknocken sind in einer Führungsbahn 15 schwenkbar (Figur 6) und verschiebbar gelagert. Die Schutzklappe 14 kann dabei in dem etwa um 90° aufgeschwenkten Zustand auf der Oberseite des Steckergehäuses zurückgeschoben werden, sodass sie im Buchsenteil weniger Platz beansprucht und den Steckvorgang nicht behindert. Die vollständige Öffnungsposition ist in Figur 7 dargestellt, die jedoch unter normalen Umständen nur im korrespondierenden Buchsenteil erreicht wird.

Die Führungsbahn 15 wird einerseits durch je einen Oberflächenabschnitt am Gehäuseteil 4 und durch die Unterseite einer Abwinklung 23 des Schnappbügels 6 gebildet. Jeder U-Schenkel 22 ist dabei soweit abgewinkelt, dass er die Gelenknocken 17 ausreichende übergreift. Die Schutzklappe 14 wird mittels einer Schraubendruckfeder 25 in die Schliessposition vorgespannt. Diese Feder sitzt auf einem Federdorn 32 am Gehäuseteil 4. Die Beaufschlagung der Schutzklappe erfolgt indirekt über einen Stössel 26, der die Schraubendruckfeder teilweise umgibt. Die Stösselstirnseite berührt in jeder Position der Schutzklappe einen Hebelarm 19, der über die Ebene der Gelenknocken 17 hinausragt.

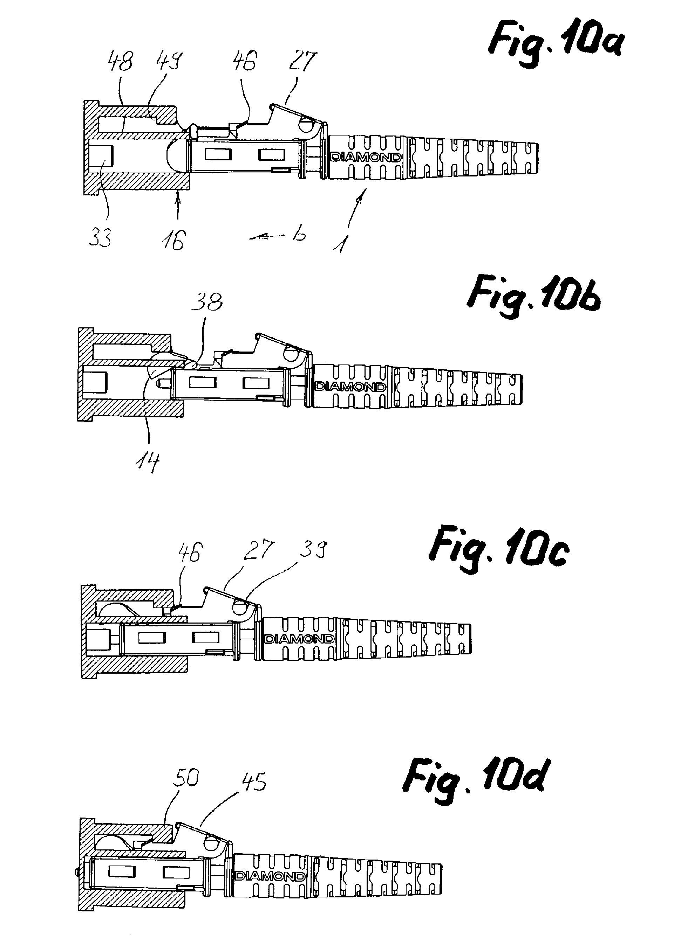

Die Steuerung der Schutzklappe 14 beim Einstecken in ein Buchsenteil 16 (Figuren 10a bis 10d) erfolgt an einem Steuernockenpaar 38, das ebenfalls an der Gelenkgabel 18 über den Gelenknocken 17 angeordnet ist. Das Buchsenteil 16 enthält die eigentliche Buchse 33, welche den Steckerstift 3 passgenau aufnimmt. In der einmal aufgeschwenkten Position bleibt die Schutzklappe 14 relativ zum Buchsenteil 16 stehen, während das Steckerteil weiter eingeschoben wird.

Die Verriegelung des Steckerteils im Buchsenteil erfolgt mit Hilfe eines Verriegelungselements 27, dessen Aufbau in Figur 9 genauer dargestellt ist. Das Biegeteil beispielsweise aus Stahl verfügt über zwei etwa parallele, flächige Arme 44, an deren Ende je eine nach aussen gerichtete Abwinklung 46 angeordnet sind. Diese Abwinklungen bilden eine Sperrklinkenpaar und sie sind derart unter einem Winkel zur Längsmittelachse 34 angeordnet, dass die Arme 44 beim Einstekken in das Buchsenteil 16 gegen die Federkraft niedergedrückt werden.

Die Verbindung der beiden Arme 44 erfolgt über ein Griffstück 45, an dem eine Blattfeder 42 angeordnet ist. Die Blattfeder erstreckt sich nach unten zwischen die beiden Arme 44 und ihr Ende 43 ist derart ausgebildet, dass es gleitend mit der Oberfläche des Steckergehäuses zusammenwirken kann.

In den Armen 44 sind seitliche Aussparungen 41 angeordnet. Diese übergreifen seitliche Gelenknocken 40 am Steckerteil 5. Die Gelenknocken 40 sind in der oberen Hälfte etwas angeschrägt, womit das Aufschnappen des Verriegelungselements 27 erleichtert wird. Auf diese Weise wird ein Drehgelenk 39 gebildet, um welches das Verriegelungselement 27 gegen die Kraft der Blattfeder 42 in Pfeilrichtung a schwenkbar ist. Beim Niederdrücken des Verriegelungelements tauchen dabei die beiden Arme 44 in die Führungsbahn 15 ein. Der U-förmige Schnappbügel 6 dient auf diese Weise zusätzlich als Schutz und Führung der Arme 44.

Das Buchsenteil 16 verfügt gemäss Figur 8 über eine Einstecköffnung 47 mit einer speziellen Konfiguration. Auf beiden Seitenwänden sind Seitenleisten 48 angeordnet. Unmittelbar hinter der Einstecköffnung werden an der Oberseite Hinterschneidungen 49 gebildet, in denen die Sperrklinken 46 des Verriegelungselements einrasten können.

Ein Einsteckvorgang ist in den Figur 10a bis 10d im Detail dargestellt. Das Steckerteil 1 wird dabei lagerichtig an das Buchsenteil 16 angesetzt und in Pfeilrichtung b gegen die Buchse 33 geschoben. Dabei werden die Steuernocken 38 durch die Seitenleisten 48 zurückgeschwenkt und die Schutzklappe 14 beginnt ihre Öffnungsbewegung. Sobald die Sperrklinken 46 den Mündungsbereich des Buchsenteils erreichen, wird das Verriegelungselement 27 um das Drehgelenk 39 niedergeschwenkt. Sobald die Sperrklinken die Hinterschneidung 49 erreicht haben, rasten sie unter der Federkraft dort ein. In dieser Position hat das Steckerteil 1 die endgültige Einsteckposition erreicht.

Aus Figur 10d ist ersichtlich, dass ein Oberflächenabschnitt 50 über der Einstecköffnung 47 zusammen mit dem Griffstück 45 einen stumpfen Winkel einschliesst. Das Griffstück schliesst sich dabei annähernd nahtlos an den Oberflächenabschnitt 50 an, sodass sich keine Kabel verhaken können.

## Patentansprüche

1. Steckerteil (1) für eine optische Steckverbindung mit einem Steckergehäuse (2), in dem wenigstens ein Steckerstift (3) gehalten ist und mit einem federnden Verriegelungselement (27) zum zugfesten Verriegeln des Steckerteils in einem Buchsenteil (16) beim Erreichen der endgültigen Einsteckposition, dadurch gekennzeichnet, dass das Verriegelungselement (27) an einem Drehgelenk (39) schwenkbar am Steckerteil befestigt ist und sich federnd auf dem Steckergehäuse (2) abstützt.

2. Steckerteil nach Anspruch 1, dadurch gekennzeichnet, dass das Verriegelungselement (27) auf das Steckergehäuse (2) aufgeschnappt ist.

3. Steckerteil nach Anspruch 2, dadurch gekennzeichnet, dass das Steckergehäuse (2) ein Paar Gelenknocken (40) aufweist und dass das Verriegelungselement (27) ein Paar korrespondierende Ausnehmungen (41) aufweist, in welche die Gelenknocken eingreifen.

4. Steckerteil nach einem der Ansprüche 1 bis 3, dadurch gekennzeichnet, dass das Verriegelungselement eine Blattfeder (42) aufweist, deren eines Ende (43) auf dem Steckergehäuse (2) aufliegt und welche das Verriegelungselement (27) in eine Verriegelungsposition vorspannt.

5. Steckerteil nach Anspruch 4, dadurch gekennzeichnet, dass das Verriegelungselement (27) zwei etwa parallele Arme (44) und ein die Arme verbindendes Griffstück (45) aufweist, an dem die Blattfeder (42) angeordnet ist.

6. Steckerteil nach einem der Ansprüche 1 bis 5, dadurch gekennzeichnet, dass das Verriegelungselement (27) als einstückiges Biegeteil aus Metall ausgebildet ist.

7. Steckerteil nach Anspruch 5 und 6, dadurch gekennzeichnet, dass an den freien Enden der Arme (44) Sperrklinken (46) in der Form von Abwinklungen angeordnet sind.

8. Steckerteil nach Anspruch 7, dadurch gekennzeichnet, dass die Abwinklungen unter einem spitzen Winkel zur Längsmittelachse (34) des Steckerteils verlaufen und dass sie Rampen bilden, an denen die Arme (44) beim Einstecken in ein Buchsenteil (16) gegen die Federkraft schwenkbar sind.

9. Steckerteil nach Anspruch 7 oder 8, dadurch gekennzeichnet, dass die Arme (44) beim Schwenken des Verriegelungselements (27) gegen die Federvorspannung wenigstens teilweise in korrespondierende Vertiefungen (15) am Steckergehäuse eintauchen.

10. Steckerteil nach einem der Ansprüche 1 bis 9, dadurch gekennzeichnet, dass das Verriegelungselement (27) am kabelseitigen Ende des Steckerteils angelenkt ist.

11. Optische Steckverbindung mit wenigstens einem Steckerteil (1) nach einem der Ansprüche 1 bis 9 und mit einem Buchsenteil (16), das wenigstens eine Buchse (33) zur Aufnahme des Steckerstifts (3) aufweist, wobei das Verriegelungselement (27) beim Erreichen der endgültigen Einsteckposition in wenigstens eine Hinterschneidung (49) am Buchsenteil eingreift.

12. Steckverbindung nach Anspruch 10, dadurch gekennzeichnet, dass das Buchsenteil (16) einen Oberflächenabschnitt (50) über der Einstecköffnung (47) aufweist, der mit einem Oberflächenabschnitt (45) am Verriegelungselement einen stumpfen Winkel einschliesst, wobei die beiden Oberflächenabschnitte im wesentlichen stufenlos aneinander anschliessen.

13. Steckverbindung nach Anspruch 11 oder 12, dadurch gekennzeichnet, dass das Verriegelungselement zum zugfesten Eingreifen in das Buchsenelement ein Sperrklinkenpaar aufweist, dessen rampenartige Oberfläche mit der Einstecköffnung am Buchsenteil derart zusammenwirkt, dass das Verriegelungselement beim Einsteckvorgang gegen die Vorspannkraft geschwenkt wird.
